# EUROPEAN PATENT APPLICATION

(11) **EP 4 653 906 A1**
(43) Date of publication of application: **26.11.2025**
(21) Application number: 25178368.4
(22) Date of filing: 22.05.2025
(51) Int. Cl.: G01S 5/02, G01S 5/12

(54) **MAPPING SAFETY EQUIPMENT TO PREDEFINED LOCATIONS ON AREA OF INTEREST**

(30) Priority: 24.05.2024 US 202463651695 P
(71) Applicant: Autronica Fire & Security AS, 7047 Trondheim (NO); Carrier Corporation, Palm Beach Gardens, FL 33418 (US)
(72) Inventor: VANNEBO, Per Johan, 7047 Trondheim (NO)
(74) Representative: Dehns

(57) **Abstract**

A device (102) for mapping safety equipment (106) to predefined locations in an area of interest (AOI) (104). The device (102) includes a communication module (212) configured to transmit and/or receive a radio signal, and a controller (203) configured to receive the radio signal from one or more safety equipment (106A-106N) using the communication module (212), determine a position for each of the one or more safety equipment (106A-106N) with respect to the device (102) based on the received radio signal, and map each of the one or more safety equipment (106A-106N) to at least one predefined location from one or more predefined locations on the AOI (104) based on the corresponding position of the one or more safety equipment (106A-106N).

## Description

### BACKGROUND

This invention relates to the field of fire safety equipment networks, and more particularly, relates to mapping safety equipment to predefined locations on an area of interest.

### SUMMARY

According to a first aspect of the invention, there is provided a device for estimating position of safety equipment in an area of interest (AOI). The device comprises a controller configured to receive a radio signal from one or more safety equipment using a communication module, and determine at least one of a distance or a direction of for each of the one or more safety equipment with respect to (from) the device based on the received radio signal and determine an estimated position corresponding to each of the one or more safety equipment.

Optionally, the controller is configured to map each of the one or more safety equipment to a predefined location from a plurality of predefined locations on the AOI based on the corresponding estimated position of the one or more safety equipment.

Optionally, to determine the position of each of the one or more safety equipment, the controller is configured to: determine at least one of the direction associated with the reception of the radio signal from each of the one or more safety equipment, or the distance between the device and the one or more safety equipment based on the radio signal received from each of the one or more safety equipment; and determine the position based on at least one of the direction or the distance.

Optionally, the controller is configured to determine the estimated position based on at least one of: the direction or the distance.

Optionally, the controller is configured to determine spatial coordinates of each of the one or more safety equipment within the AOI based on the estimated position.

Optionally, the controller is configured to: determine an identifier of the one or more safety equipment based on data pertaining to one or more parameters stored in the radio signal; and compare the predefined location of the one or more safety equipment to a desired location associated with the identity of the one or more safety equipment.

Optionally, the one or more parameters comprise at least one of: a Unique Identifier (ID), a type, a location, or a status.

Optionally, the controller is configured to determine the identifier of the one or more safety equipment based on one or more attributes of the radio signal, the one or more attributes comprising at least one of a frequency, an amplitude, a phase, or a duration, and wherein the one or more attributes of the radio signal transmitted by each of the one or more safety equipment is unique.

Optionally, in response to the predefined location of the one or more safety equipment not matching a desired location associated with the identity of the one or more safety equipment, the controller is configured to transmit an alert signal.

Optionally, the device comprises a communication module configured to transmit a request signal to each of the one or more safety equipment, wherein the transceiver is configured to receive the radio signal from each of the one or more safety equipment in response to the request signal.

Optionally, the controller is configured to: determine that the position of at least one safety equipment of the one or more safety equipment is changed; and update the predefined location mapped to the at least one safety equipment based on the change in the position.

According to a second aspect of the invention, there is provided a system for mapping location of safety equipment in an AOI. The system comprises a computing unit having a processor and a memory, wherein the memory comprises one or more processor-executable instructions configured to cause the processor to receive an estimated position of each of one or more safety equipment through at least one device (for example, any of the devices for estimating position of safety equipment in an area of interest (AOI) mentioned above) associated with the one or more safety equipment, and map each of the one or more safety equipment to at least one predefined location from one or more predefined locations on the AOI based on the corresponding estimated position of the one or more safety equipment.

Optionally, the at least one device devices is configured to receive the radio signal from a second subset of safety equipment via a first subset of safety equipment of the one or more safety equipment, wherein the first subset of safety equipment is configured to relay the radio signals from the second subset of safety equipment to the at least one device.

Optionally, the computing unit is configured to: receive and combine the direction or the distance of each safety equipment from other safety equipment through the at least one device to generate a matrix, and determine an estimated position for each of the one or more safety equipment using the matrix.

Optionally, the radio signals of the one or more safety equipment comprises one or more parameters, the one or more parameters comprising at least one of a Unique Identifier (ID), a type, a location, or a status.

Optionally, the computing unit is configured to transmit an actuation signal to actuate the one or more safety equipment configured thereto based on the one or more parameters in the coordination signal.

Optionally, the one or more safety equipment are any one or combination of a fire detector, a smoke detector, a fire suppression means, an alarm, a heat detector, a carbon monoxide detector, a gas detector, a flame detector, a motion sensor, and an occupancy sensor.

According to a third aspect of the invention, there is provided a method for mapping safety equipment to predefined locations in an area of interest (AOI). The method comprises receiving a radio signal from one or more safety equipment, determining an estimated position of each of the one or more safety equipment with respect to a device (for example, any of the devices for estimating position of safety equipment in an area of interest (AOI) mentioned above) based on the received radio signal, and mapping each of the one or more safety equipment to at least one predefined location from one or more predefined locations on the AOI based on the corresponding position of the one or more safety equipment.

Optionally, for receiving the request signal, the method comprises: transmitting a request signal using a communication module; and receiving the radio signal from at least one of the remaining devices among the one or more devices present in a network coverage area around the corresponding device.

Optionally, the method comprises determining an identifier associated with each identity of the one or more safety equipment based on data pertaining to one or more parameters stored in the radio signal, comparing the predefined location of the one or more safety equipment to a desired location associated with the identity of the one or more safety equipment, and in response to the predefined location of the one or more safety equipment not matching the desired location associated with the identity of the one or more safety equipment, transmitting an alert signal.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention and are incorporated in and constitute a part of this specification. The drawings illustrate exemplary embodiments of the invention and, together with the description, serve to explain the principles of the invention by way of example only.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 shows a fire alarm system implemented in an area of interest.
FIG. 2 shows a block diagram of an example device used in the fire alarm system.
FIG. 3 shows a schematic view of a system for mapping location of safety equipment in an area of interest implementing the fire safety system.
FIG. 4 shows a flow chart of an example method for mapping safety equipment to a predefined location in the area of interest.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

Identifying the physical location of each fire safety equipment is important for configuring and operating fire safety systems. For instance, identifying which location of an area of interest (AOI) (or environment) the fire safety equipment is installed in allows the fire safety system to determine the location of fire or fire hazards (such as by mapping the fire to a room in a building, for example), and appropriately take measures to minimize damage therefrom. Further, knowing the locations of safety equipment allows for efficient maintenance and upgradation of the safety equipment. Typical solutions for locating fire safety equipment implemented in AOI such as buildings include manual and visual inspections of the AOI. Some solutions include the use of test gases to trigger a response from the fire safety equipment, while other solutions include turning on a light-emitting diode (LED) associated with the safety equipment. However, such solutions are time-consuming and laborious. Such solutions are also susceptible to errors, delays, and increased operational costs. The need for human involvement not only introduces the potential for inaccuracies but also hampers efficiency, thereby hindering the ability to promptly adapt to changing configurations or scale the fire safety equipment network effectively. Therefore, there is a need for an automated solution to identify positions of fire safety equipment and map to a location on the AOI, thereby eliminating the need for manual and visual inspections by human operators.

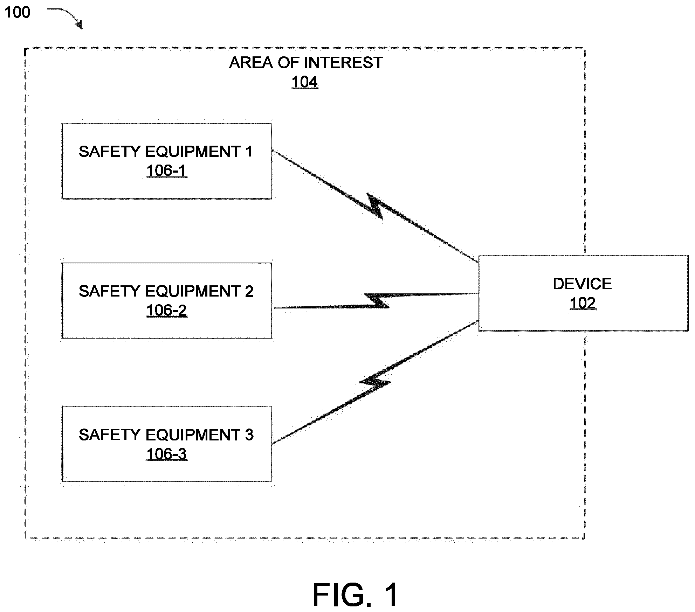

Referring to FIG. 1, a fire alarm system 100 configured to an AOI 104 is illustrated. As shown, the fire alarm system 100 may be implemented in the AOI 104 using one or more safety equipment, such as safety equipment 1 106-1, safety equipment 2 106-2, and safety equipment 3 106-3 (collectively referred to as safety equipment 106). The AOI 104 may correspond to any one of including, but not limited to, houses, gardens, open fields, forests, commercial establishments, offices, industrial buildings such as power plants, manufacturing lines, etc., power grids, power lines, gas and petroleum supply lines, vehicles, such as cars, trailers, trains, cruise ships, flights, submarines, and the like. While the forthcoming examples and embodiments discuss the invention in the context of the fire alarm system 100 being implemented in structures such as buildings, it may be appreciated by those skilled in the art that the device 102, and systems and methods described subsequently, may be suitably adapted to map the safety equipment 106 to predefined locations on any AOI 104.

The fire alarm system 100 may include one or more of the safety equipment 106. The fire alarm system 100 may include any one or combination of safety equipment 106 including, but not limited to, a fire detector, a smoke detector, a fire suppression means, an alarm, a heat detector, a flame detector, a carbon monoxide detector, a gas detector, a motion sensor, an occupancy sensor, and the like. The fire suppression means may include, but not be limited to, sprinklers, water mist systems, gas-based suppressed systems, foam suppression systems, and the like, that are configured to suppress or extinguish fire.

The safety equipment 106 may be deployed in the AOI 104 at one or more predefined locations on the AOI 104. The safety equipment 106 may be attached/configured to a portion of the predefined location, such as the ceiling of a room, to detect and/or suppress fire in the predefined location corresponding thereto. The predefined locations may correspond to subordinate/sub-units within the AOI 104. In some examples, the predefined location may correspond to rooms, hallways, corridors, and the like, of the AOI 104 indicative of a building. In some examples, the predefined location may correspond to train cars of a train. The predefined location may be represented using a set of coordinate values. The predefined location may be one coordinate point or an area formed by boundaries of the set of coordinate values. The safety equipment 106 may be assigned/mapped to the predefined location if the safety equipment 106 is positioned within the boundaries of the set of coordinates associated with the predefined location.

In one or more embodiments, the safety equipment 106 may include a communication means. The communication means may be at least one of a transmitter, a receiver, a transceiver, or a transponder, but not limited to the like. The transmitter may be configured to transmit radio signals, and the receiver may be configured to receive radio signals from other safety equipment 106 or the device 102. The transceiver may be a combination of the transmitter and the receiver. The transponders may be configured to receive radio signals transmitted towards them and emit the radio signals in response thereto. The communication means may allow the safety equipment 106 to transmit and/or receive data through radio signals. In one or more embodiments, the radio signals may include data associated with the safety equipment 106.

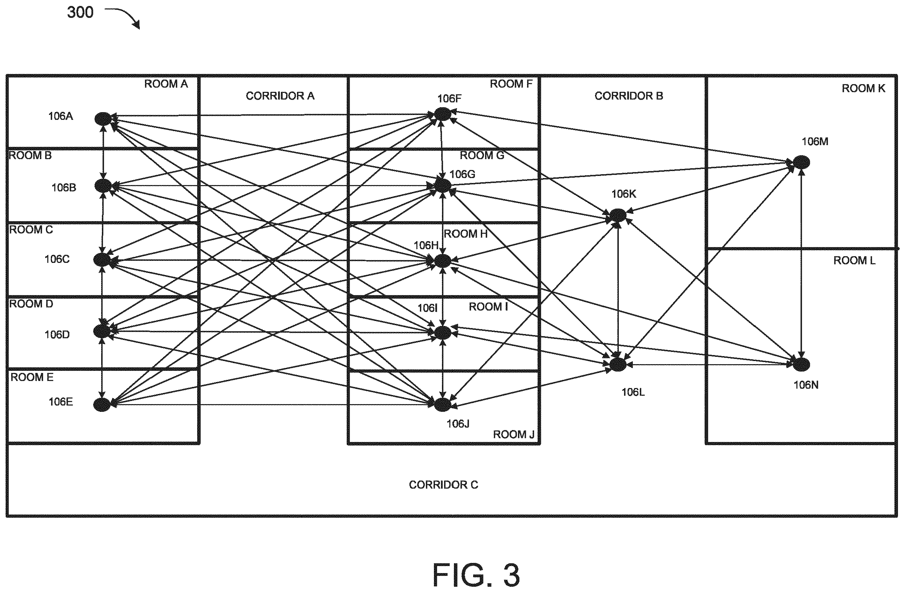

The position of the safety equipment 106 may be identified by a device 102, and mapped with a corresponding predefined location on the AOI 104. The device 102 may be configured to receive the radio signals from the safety equipment 106. The device 102 may determine at least one of a distance and/or a direction of each of the safety equipment 106 from the device 102 based on the radio signals. The distance of the direction may be used to determine an estimated position corresponding to each of the safety equipment 106. In one or more embodiments, the device 102 may be configured to map of each of the safety equipment 106 to a predefined location on the AOI 104 based on the corresponding estimated position. In other embodiments, the device 102 may transmit the estimated positions to an external device (such as a control panel, an external computing unit, or a system 300 as described subsequently in reference to FIG. 3), which may receive the estimated positions and map them to the predefined locations. In one or more embodiments, the device 102 may be implemented within the AOI 104 as a standalone device. In one or more embodiments, the device 102 may be portable and may be moved within the AOI 104 to identify the predefined locations corresponding to safety equipment 106. In one or more embodiments, the device 102 may be implemented within one or more of the safety equipment 106, where safety equipment 106 configured with the device 102 may determine and map estimated positions to predefined locations in the AOI 104 in addition to sensing and/or fire suppression functionalities. In one or more embodiments, the device 102 may be implemented in the system 300.

The safety equipment 106 of the fire safety system 100 may be managed using the external computing unit or the control panel (not shown). The control panel may include a mapping of the safety equipment 106 on a layout (such as a blueprint) of the AOI 104. The control panel may allow operators to view status (such as whether they are alive, require maintenance, have detected fire, and the like). The device 102 may be used to map the safety equipment 106 to the layout associated with the AOI 104 with minimal human involvement.

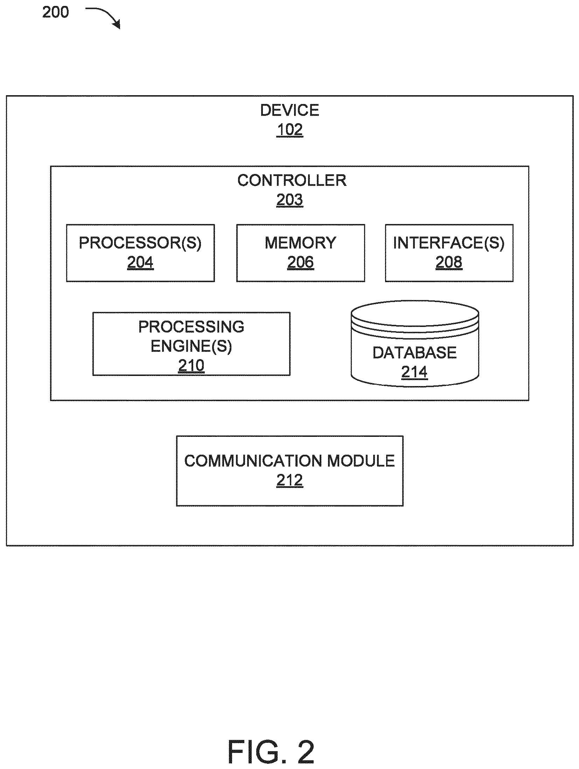

FIG. 2 illustrates a block diagram 200 of the device 102, in accordance with one or more embodiments of the invention. As shown, the device 102 may include a controller 203. The controller 203 may include such as one or more processors 204, a memory 206, and an interface(s) 208. The one or more processors 204 may be implemented as one or more microprocessors, microcomputers, microcontrollers, digital signal processors, central processing units, logic circuitries, and/or any devices that manipulate data based on operational instructions. Among other capabilities, the one or more processor(s) 104 may be configured to fetch and execute computer-readable instructions stored in the memory 206 of the controller 203. The memory 206 may store one or more processor-executable instructions or routines, which may be fetched and executed to map the safety equipment 106 to corresponding predefined locations on the AOI 104. The memory 206 may include any non-transitory storage device including, for example, volatile memory such as Random-Access Memory (RAM), or non-volatile memory such as Erasable Programmable Read-Only Memory (EPROM), flash memory, and the like.

The interface(s) 208 may include a variety of interfaces, for example, a variety of interfaces, for example, interfaces for data input and output devices, referred to as I/O devices, storage devices, and the like. The interface(s) 208 may facilitate communication of the device 102 with various devices coupled to it. The interface(s) 208 may also provide a communication pathway for one or more components of the device 102. Examples of such components including but are not limited to, processing engine(s) 210, a database 214, and the like. The database 214 may include data that is either stored or generated as a result of functionalities implemented by any of the components of the processing engine(s) 210. In one or more embodiments, the database 214 may store the set of coordinate values associated with each of the predefined locations.

In one or more embodiments, the processing engine(s) 210 may be implemented as a combination of hardware and software (for example, programmable instructions) to implement one or more functionalities of the processing engine(s) 210. In examples described herein, such combinations of hardware and software may be implemented in several different ways. For example, the software for the processing engine(s) 210 may be processor-executable instructions stored on a non-transitory machine-readable storage medium and the hardware for the one or more processor(s) 204 may include a processing resource (for example, one or more processors), to execute such instructions. In the present examples, the machine-readable storage medium may store instructions that, when executed by the processing resource, implement the processing engine(s) 210. In such examples, the controller 203 may include the machine-readable storage medium storing the instructions and the processing resource to execute the instructions, or the machine-readable storage medium may be separate but accessible to the device 102 and the processing resource. In other examples, the processing engine(s) 210 may be implemented by an electronic circuitry.

The device 102 may include a communication module 212. The communication module 212 may be configured to allow communication between the device 102, and the safety equipment 106 and/or the external computing unit. In one or more embodiments, the communication module 212 may be a short-range communication means, such as Bluetooth^{®}. In other embodiments, the communication module 212 may be implemented as any one or combination of including, but not limited to, near-field communication (NFC), infrared (IR), telecommunication means, wireless networks such as Local Area Networks (LAN), Wide Area Networks (WAN), and the like. In one or more embodiments, the communication module 212 may be implemented as at least one of: a transmitter, a receiver, or a transceiver. In one or more embodiments, the communication module 212 may be indicative of wired communication means, such as including, but not limited to, electrical wires, optical fiber cables, bus bars, and the like.

The device 102 may be configured to receive the radio signals transmitted by the safety equipment 106 using the communication module 212. In one or more embodiments, the safety equipment 106 may transmit the radio signal periodically, which the device 102 may receive and process. In other embodiments, the safety equipment 106 may transmit the radio signals in response to a request signal transmitted from the communication module 212 of the device 102. In yet other embodiments, the safety equipment 106 may be configured to receive the request signals transmitted by the communication module 212 and emit the radio signal in response thereto using a transponder. In one or more embodiments, the radio signal may be either directed radio signals, or radio signals broadcasted over an area.

Upon reception of the radio signal, the device 102 may be configured to determine an estimated position for each of the safety equipment 106 from the device 102 based on the received radio signal. In one or more embodiments, the estimated position may be indicative of a relative position of the safety equipment 106 with respect to the device 102. The relative position may indicate a direction and distance from the device 102 that the safety equipment 106 is in. To determine the estimated position of each of the safety equipment 106, the controller 203 of the device 102 may be configured to determine at least one of the direction associated with the reception of the radio signal from each of the safety equipment 106, and/or the distance between the device 102 and the safety equipment 106 based on the radio signal.

In one or more embodiments, the controller 203 may determine the spatial coordinates of each safety equipment 106 with respect to the AOI 104 based on the estimated position. In one or more embodiment, the spatial coordinates may be a set of values that represent a unique location within a three-dimensional (3D) space or the layout. In one or more embodiments, the 3D space may be indicative of a virtual reconstruction of the AOI 104. In other embodiments, the 3D space may correspond to a blueprint of the AOI 104. The AOI 104 may include one or more environmental attributes associated therewith, which may include at least one of including, but not limited to, physical environment, information of occupancy capacity of the physical environment, coordinate information of the physical environment, blueprint of the physical environment, information of number of partitions associated with the physical environment, a segment identifier of each partition associated with the physical environment, and the like. In one or more embodiments, the spatial coordinates may include three coordinates: x, y, and z, where each coordinate corresponds to a specific dimension in the 3D space. In one or more embodiments, the position of the device 102 in the 3D space may be known. In some examples, the position of the device 102 may be determined to be an origin of the 3D space (i.e. a point having '0' as value for the three coordinates). Once the distance and/or the direction of the safety equipment 106 is determined, the controller 203 may determine coordinates of the safety equipment 106 with respect to the device 102. The device 102 may allow operators of the AOI 104 to identify and map the estimated position of the safety equipment 106 to one or more of the predefined locations on the AOI 104.

In one or more embodiments, the device 102 may utilize known signal processing techniques including, but not limited to, Inverse Fast Fourier Transform (IFFT), multipath channel impulse response estimation, Time of Flight, phase shift analysis, signal strength, and the like, to determine the direction and distance of the safety equipment 106 from the device 102. These techniques may collectively enhance precision in measurement, allowing for detailed spatial information. In one or more embodiments, the device 102 may be configured with localization techniques. By using the localization techniques, the device 102 may determine the position of the safety equipment 106 when the fire safety system 100 is implemented as a Wireless Sensor Network (WSN). The techniques used for determining the distance and/or direction may be selected based on accuracy required, computational complexity, energy consumption, and other constraints imposed by the requirements.

In one or more embodiments, the controller 203 may be configured to map each of the safety equipment 106 to at least one predefined location from the one or more predefined locations on the AOI 104 based on the corresponding estimated position of the safety equipment 106. In embodiments where the predefined location is indicative of boundaries formed by the set of coordinate values, the safety equipment 106 may be mapped to the predefined location whose boundaries include the estimated position of the safety equipment 106 therewithin. By mapping the position of the safety equipment 106 to at least one predefined location on AOI 104, the fire safety system 100 may be able to determine the source of the fire, and take appropriate measures to suppress or extinguish the fire, for example.

In one or more embodiments, the controller 203 may be configured to determine an identifier associated with the safety equipment 106 based on data pertaining to one or more parameters provided stored in the radio signal. In one or more embodiments, the data in the parameters include at least one of a unique Identifier (ID), a type, a location, or a status. The unique ID may correspond to an identifier/value exclusively associated with the safety equipment 106. The type may indicate the category of the safety equipment 106, such as whether it is a fire detector, a smoke detector, a fire suppression means, an alarm, or the like. The location parameter may correspond to the desired location of the safety equipment 106. The status may indicate an operational status of the safety equipment 106, such as a fire sensor detecting fire at its location, for example.

In one or more embodiments, the controller 203 may be configured to determine the identifier of the one or more safety equipment 106 based on one or more attributes of the radio signal. The attributes may include, but not be limited to, at least one of a frequency, an amplitude, a phase, or a duration. The attributes of the radio signal transmitted by each of the safety equipment 106 are unique. For example, radio signals having a frequency of about 50Mhz and duration of about 1 second each may be associated with safety equipment 106 that are fire sensors, and radio signals having a frequency of about 60Mhz and duration of about 0.5 seconds may be associated with safety equipment 106 that are sprinklers.

The controller 203 may be configured to compare the predefined location of the safety equipment 106 to a desired location associated with the identity of the safety equipment. The desired location may correspond to the predefined location where the safety equipment 106 is intended to be placed. In response to the predefined location mapped to the safety equipment not matching the desired location associated with the identity of the one or more safety equipment, the controller 203 may be configured to transmit an alert signal. The alert signal may be used to indicate the misplacement of the safety equipment 106. In some embodiments, the alert signal may be transmitted to the computing unit or control panel used to manage the fire alarm system 100, which may indicate the misplacement. In one or more embodiments, the device 102 may be configured to provide audio or visual feedback to the operator of the device 102. For example, if a safety equipment 106 is a fire sensor that is intended to be placed in desired location "Room A", but the controller 203 maps that the predefined location "Room B", the controller 203 may compare the desired location with the predefined location mapped to the safety equipment 106 and transmit the alert signal to indicate the misplacement.

In one or more embodiments, if the estimated position of at least one safety equipment of the safety equipment 106 is changed, the device 102 may update the predefined location mapped to the at least one safety equipment based on the change in the estimated position. For example, if the safety equipment 106 is removed from a first predefined location and refitted into a second predefined location, the device 102 may determine the change in the position of the safety equipment 106, and map the safety equipment 106 with the second predefined location. In one or more embodiments, if any safety equipment 106 is added or removed from the AOI 104, the device 102 may update the mapping of the safety equipment 106 based on the addition or removal of the safety equipment 106.

Referring to FIG. 3, an example schematic view of a system 300 mapping location of safety equipment in an AOI 104 implementing the fire safety system 100 is illustrated. The system 300 includes a computing unit (not shown) having a processor and a memory, wherein the memory comprises one or more processor-executable instructions configured to cause the processor to map location of the safety equipment to predefined locations on the AOI 104. In one or more embodiments, the computing unit may be implemented as an external computing device, a centralized controller, or the control panel. In other or more embodiments, the computing unit may be implemented in the device 102. In such embodiments, the processor 204 and the memory 206 of the controller 203 may correspond to the processor and the memory of the computing unit. The example schematic view shows a schematic view of the AOI 104 indicative of a floor of a building. The floor may have one or more rooms, such as Room A to Room L, and one or more corridors, such as Corridor A to Corridor C. The rooms and the corridors shown in the example schematic view may correspond to the predefined locations of the AOI 104. Further, safety equipment 106A to 106N may be installed in the rooms and the corridors. In some embodiments, the safety equipment 106A-106N may be integrated within the device 102. In other embodiments, at least one device 102 may be assigned to receive the radio signals from one or more of the safety equipment 106A-106N. In one or more embodiments, each of the safety equipment 106A-106N may be interconnected and may be configured to exchange radio signals therebetween. Each of the safety equipment 106A-106N may be configured to determine the position of one or more remaining safety equipment 106. While the operation of the safety equipment 106A-106N of the system 300 in forthcoming embodiments and examples are discussed from the perspective of safety equipment 106A, it may be appreciated by those skilled in the art that the following operations may be performed by any of the safety equipment 106A-106N, the computing unit associated with the system 300, or independently by the device 102.

In one or more embodiments, each of the safety equipment 106A-106N may be configured to transmit a radio signal using a corresponding communication means. For example, the safety equipment 106A may be configured to transmit the radio signals to remaining safety equipment 106B-106N, or the computing unit of the system 300 or the device 102.

In one or more embodiments, the computing unit may be configured to receive the estimated position of each of the safety equipment 106A-106N through at least one device associated with the safety equipment 106A-106N. For example, the device 102 configured to safety equipment 106A may be configured to receive the radio signal from at least one of safety equipment 106B-106N in a network coverage area. The network coverage area of the safety equipment 106B-106N may be determined by the transmission and detection range of the corresponding communication modules. In the example shown in FIG. 3, the network coverage area of the safety equipment 106A may include safety equipment 106B, 106F, 105G, 106H, 106I, and 106J (hereafter referred to as the first subset of safety equipment). The safety equipment106A may also be configured to receive the radio signals from a second subset of safety equipment, such as safety equipment 106C, 106D, 106K, 106L, and 106M, among others. In one or more embodiments, the first subset of safety equipment may be configured to relay the radio signals transmitted by the second subset of devices to at least one of the safety equipment 106B-106N, such as devices safety equipment 106A.

In one or more embodiments, the computing unit may be configured to receive and combine the direction and/or the distance of each safety equipment 106A-106N from other safety equipment 106A-106N through the device 102 to generate a matrix. The devices 102 (or those configured in one or more of the safety equipment 106A-106N) may be configured to determine the position using techniques as described in reference to device 102 in FIG. 1. In one or more embodiments, the matrix may be indicative of a data structure storing distances and directions between each safety equipment 106A-106N to other safety equipment 106A-106N. The computing unit may determine an estimated position for each of the one or more safety equipment using the matrix. In one or more embodiments, the distances and/or direction between each of the safety equipment 106A-106N may allow the computing unit to determine the spatial coordinates of each of the safety equipment 106A-106N on a 3D space associated with the AOI 104. In one or more embodiments where a subset of safety equipment is configured with the device 102, the computing unit may receive a partial matrix of distances and/or directions from each of safety equipment in the subset. For example, the safety equipment 106A may indicate in its radio signal that the safety equipment 106B is 4 meters south of safety equipment 106A, and the safety equipment 106F is 4 meters to the east of safety equipment 106A. The computing unit may receive the partial matrix of distances and/or directions, and determine that safety equipment 106F is 5 meters to the north each of safety equipment 106B, thereby completing the matrix (at least with respect to the safety equipment 106A, 106B, and 106C). Partial matrices from all of the safety equipment 106A-106N may be received to generate a global matrix having distances and/or directions between any two safety equipment 106 in the AOI 104. In one or more embodiments where the device 102 is a portable device, the device 102 may be carried/moved to each of the predefined locations where the device 102 may receive the radio signals and estimate positions of a subset of safety equipment in the predefined locations. The device 102 may transmit the estimated positions when connected to the computing unit, which may generate the matrix therewith. In one or more embodiments, the safety equipment 106 may be interconnected with the computing unit, where the computing unit may be configured to receive the distances and/or directions from the safety equipment 106, and generate the matrix therewith.

In one or more embodiments, each of the devices 102A-102N may be configured to map each of the safety equipment 106A-106N to a corresponding predefined location the AOI 104, based on the corresponding estimated position of the safety equipment 106A-106N. In some examples, such as implementations shown in FIG. 3, the safety equipment 106A may be configured to determine, using the device 102, the distance and direction of the safety equipment 106B therefrom, and determine the estimated position of the safety equipment 106B. The computing unit may receive and use the estimated position to map the safety equipment 106B to room B. Similarly, the safety equipment 106A determine distance and direction of safety equipment 106F therefrom, which the computing unit may receive and use to map the safety equipment 106Fwith room F, and so on for the other remaining safety equipment.

In one or more embodiments, the safety equipment 106A-106N may be configured to coordinate with each other to detect and suppress fire. In one or more embodiments, at least one safety equipment 106A from the safety equipment 106A-106N may be configured with the device 102, which may be configured to receive radio signals from one or more proximate/nearby safety equipment. The proximate safety equipment may correspond to those safety equipment 106that are located in proximity to the safety equipment 106A. In one or more embodiments, the proximate safety equipment may correspond to the safety equipment 106 within the network coverage range of the safety equipment 106A. The radio signals may include one or more parameters. The parameters may include at least one of an ID, a type, a location, or a status, associated with the proximate safety equipment. In one or more embodiments, the safety equipment 106A (using the device 102 configured thereto) may be configured to determine the location of each of the proximate safety equipment based on the radio signals and transmit an actuation signal to actuate the safety equipment 106A based on the parameters in the coordination signal.

In some examples, if the safety equipment 106M configured with device 102 indicative of a fire detector in room M detects fire, the safety equipment 106M may be configured to transmit the radio signals to the proximate safety equipment, such as safety equipment 106K in corridor B and safety equipment 106N in Room N. In such examples, the status parameter transmitted through data in the radio signals may indicate the detection of fire in room M. In some examples, the safety equipment 106K and 106N may be indicative of fire suppression means such as a sprinkler. The sprinklers, on extracting the status parameter of the radio signal, may transmit an actuation signal to the actuation means (the sprinkler) for extinguishing the fire.

The system 300 and the device 102, by being configured to mapping the safety equipment 106 to predefined locations in the AOI 104, may be able to identify the source of fire, and appropriately actuate the safety equipment 106 in proximity to the source of fire to suppress, prevent spread of, and/or extinguish the fire, thereby improving response times and reliability of the fire safety systems 100. The system 300 and the device 102 allow the safety equipment 106 to be mapped using radio signals transmitted therefrom. The safety equipment 106 may be configured to transmit the radio signals either based on a predetermined schedule, or in response to a request signal from the device 102, thereby eliminating need for human inspections.

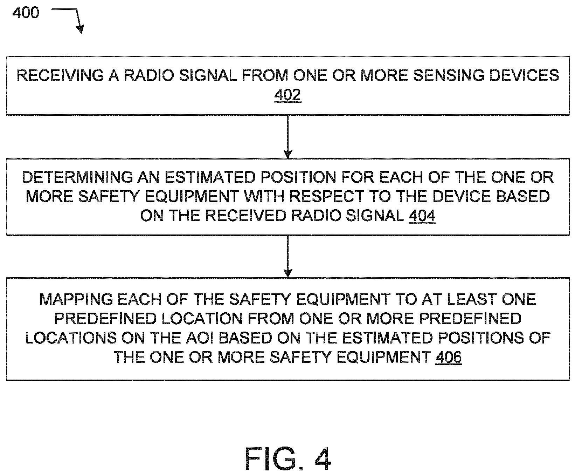

Referring to FIG. 4, a flow chart of an example method for mapping safety equipment to predefined locations in an AOI is illustrated. At block 402, the method 400 includes receiving, by a device such as device 102 of FIG. 1, for example, a radio signal from one or more safety equipment. The safety equipment may correspond to the safety equipment 106 of FIG. 1.

At block 404, the method 400 includes determining an estimated position of each of the safety equipment with respect to the device based on the received radio signal. In one or more embodiments, the method 400 may include detecting a direction associated with the reception of the radio signal from each of the safety equipment and determining a distance of the safety equipment from the device based on of the radio signal. The method 400 may include determining the position of the safety equipment based on the direction and/or the distance determined by the device 102.

At block 406, the method 400 includes mapping, by the device, each of the safety equipment to at least one predefined location from one or more predefined locations on the AOI based on the estimated position of the one or more safety equipment.

Thus, this invention (device, system, and method) provides an automated solution to identify positions of fire safety equipment and map to a location on the AOI, thereby eliminating the need for manual and visual inspections by human operators.

While the invention has been described with reference to exemplary embodiments, it will be understood by those skilled in the art that various changes may be made without departing from the scope of the invention as defined by the appended claims. Modifications may be made to adopt a particular situation or material to the teachings of the subject disclosure without departing from the scope of the invention as set out in the appended claims. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A device (102) for estimating position of safety equipment (106) in an area of interest (AOI) (104), the device (102) comprising:
a controller (203) configured to:
receive a radio signal from one or more safety equipment (106A-106N) using a communication module (212); and
determine at least one of a distance or a direction of each of the one or more safety equipment (106A-106N) from the device (102) based on the received radio signal and determine an estimated position corresponding to each of the one or more safety equipment (106A-106N).

2. The device (102) of claim 1, wherein the controller (203) is configured to map each of the one or more safety equipment (106A-106N) to a predefined location from a plurality of predefined locations on the AOI (104) based on the corresponding estimated position of the one or more safety equipment (106A-106N).

3. The device (102) of any preceding claim, wherein the controller (203) is configured to:
determine at least one of:
the direction associated with the reception of the radio signal from each of the one or more safety equipment (106A-106N); or
the distance between the device (102) and the one or more safety equipment (106A-106N) based on the radio signal received from each of the one or more safety equipment (106A-106N); or
the estimated position based on at least one of: the direction or the distance; or
spatial coordinates of each of the one or more safety equipment (106A-106N) within to the AOI (104) based on the estimated position.

4. The device (102) of claim 1, 2 or 3, wherein the controller (203) is configured to:
determine an identifier associated with the one or more safety equipment (106A-106N) based on data pertaining to one or more parameters stored in the radio signal; and
compare the predefined location of the one or more safety equipment (106A-106N) to a desired location associated with the identity of the one or more safety equipment (106A-106N),
optionally wherein the one or more parameters comprise at least one of: a Unique Identifier (ID), a type, a location, or a status.

5. The device (102) of claim 4, wherein the controller (203) is configured to determine the identifier of the one or more safety equipment (106A-106N) based on one or more attributes of the radio signal, the one or more attributes comprising at least one of: a frequency, an amplitude, a phase, or a duration, and wherein the one or more attributes of the radio signal transmitted by each of the one or more safety equipment (106A-106N) is unique; and/or
wherein in response to the predefined location of the one or more safety equipment (106A-106N) not matching a desired location associated with the identity of the one or more safety equipment (106A-106N), the controller is configured to transmit an alert signal.

6. The device (102) of any preceding claim, comprising the communication module (212) configured to transmit a request signal to each of the one or more safety equipment (106A-106N), and wherein a transceiver is configured to receive the radio signal from each of the one or more safety equipment (106A-106N) in response to the request signal.

7. The device (102) of claim any preceding claim, wherein the controller (203) is configured to:
determine that the estimated position of at least one safety equipment (106A-106N) of the one or more safety equipment (106A-106N) is changed; and
update the predefined location mapped to the at least one safety equipment (106A-106N) based on the change in the estimated position.

8. A system (300) for mapping location of safety equipment (106) in an area of interest (AOI) (104), the system (300) comprising:
a computing unit having a processor and a memory, wherein the memory comprises one or more processor-executable instructions configured to cause the processor to:
receive an estimated position of each of one or more safety equipment (106A-106N) through at least one device (102) associated with the one or more safety equipment (106A-106N), wherein the at least one device (102) is the device of any preceding claim; and
map each of the one or more safety equipment (106A-106N) to at least one predefined location from one or more predefined locations on the AOI (104) based on the corresponding estimated position of the one or more safety equipment (106A-106N).

9. The system (300) of claim 8, wherein the at least one device (102) is configured to receive the radio signal from a second subset of safety equipment via a first subset of safety equipment of the one or more safety equipment (106A-106N), wherein the first subset of safety equipment is configured to relay the radio signals from the second subset of safety equipment to the at least one device (102).

10. The system (300) of any of claims 8 and 9, wherein the computing unit is configured to:
receive and combine the direction or the distance of each safety equipment (106) from other safety equipment (106) through the at least one device (102) to generate a matrix; and
determine an estimated position for each of the one or more safety equipment (106A-106N) using the matrix.

11. The system (300) of claim 9, wherein the radio signals of the one or more safety equipment (106A-106N) comprises one or more parameters, the one or more parameters comprising at least one of: a Unique Identifier (ID), a type, a location, or a status,
optionally wherein the computing unit is configured to transmit an actuation signal to actuate the one or more safety equipment (106A-106N) configured thereto based on the one or more parameters.

12. The system (300) of any of claims 8 to 11, wherein the one or more safety equipment (106A-106N) are any one or combination of a fire detector, a smoke detector, a fire suppression means, an alarm, a heat detector, a carbon monoxide detector, a gas detector, a flame detector, a motion sensor, and an occupancy sensor.

13. A method (400) for mapping safety equipment (106) to predefined locations on an area of interest (AOI) (104), comprising:
receiving (402) a radio signal from one or more safety equipment (106A-106N);
determining (404) an estimated position of each of the one or more safety equipment (106A-106N) with respect to a device (102) based on the received radio signal; and
mapping (406) each of the one or more safety equipment (106A-106N) to at least one predefined location from one or more predefined locations on the AOI (104) based on the estimated position of the one or more safety equipment (106A-106N).

14. The method (400) of claim 13, wherein for receiving the request signal, the method comprises:
transmitting a request signal using a communication module; and
receiving the radio signal from at least one of the remaining devices among the one or more devices present in a network coverage area around the corresponding device (102).

15. The method (400) of any of claims 13 and 14, comprising:
determining an identifier associated with each of the one or more safety equipment (106A-106N) based on data pertaining to one or more parameters stored in the radio signal;
comparing the predefined location of the one or more safety equipment (106A-106N) to a desired location associated with an identity of the one or more safety equipment (106A-106N); and
in response to the predefined location of the one or more safety equipment (106A-106N) not matching the desired location associated with the identity of the one or more safety equipment (106A-106N), transmitting an alert signal.
